# EUROPEAN PATENT SPECIFICATION

(11) **EP 1 643 854 B1**
(45) Date of publication and mention of the grant of the patent: **09.01.2013**
(21) Application number: 04755961.2
(22) Date of filing: 23.06.2004
(51) Int. Cl.: A23K 1/16, A23K 1/18, A23B 4/00

(54) **METHOD OF IMPROVING ANIMAL TISSUE QUALITY BY SUPPLEMENTING THE ANIMAL DIET WITH MIXED TOCOTRIENOLS**
VERFAHREN ZUR VERBESSERUNG VON FLEICH DURCH DIE ERGANZUNG VON TIERFUTTER MIT TOCOTRIENOLE
PROCEDE D'AMELIORATION DE LA QUALITE DU TISSU D'UN ANIMAL PAR L'ENRICHISSEMENT DU REGIME ALIMENTAIRE DE L'ANIMAL EN TOCOTRIENOLS MELANGES

(30) Priority: 25.06.2003 US 606877
(43) Date of publication of application: 12.04.2006
(73) Proprietor: PIONEER HI-BRED INTERNATIONAL, INC., Des Moines, Iowa 50309 (US)
(72) Inventor: WOLF, Fred, R., Urbandale IA 50323 (US); SAUNDERS, Court, A., Clive, IA 50325 (US)
(74) Representative: Bentham, Andrew
(86) International application number: PCT/US2004/020168
(87) International publication number: WO 2005/002358

(56) References cited:
- LANARI M C ET AL: "Effect of dietary tocopherols and tocotrienols on the antioxidant status and lipid stability of chicken." MEAT SCIENCE, vol. 68, 2004, pages 155-162, XP001183810
- KANG KYUNG R ET AL: "Tocopherols, retinol and carotenes in chicken egg and tissues as influenced by dietary palm oil" JOURNAL OF FOOD SCIENCE, vol. 63, no. 4, July 1998 (1998-07), pages 592-596, XP009037149 ISSN: 0022-1147
- PATENT ABSTRACTS OF JAPAN vol. 1997, no. 05, 30 May 1997 (1997-05-30) & JP 9 009939 A (LION CORP), 14 January 1997 (1997-01-14)

## Description

### BACKGROUND

### Field of the Invention

This patent relates to a method of improving animal tissue quality. More specifically, this patent relates to a method of improving animal tissue quality by administering to the animal effective amounts of mixed tocotrienols either alone or in combination with other antioxidants.

### Description of the Related Art

Consumers have become increasingly demanding of higher quality cuts of meat. One major indicator of meat quality in pork is pH. Low pH pork (<5.4) is typically pale, soft and exudative (PSE) and therefore undesirable to the consumer. In addition, low pH carcasses exhibit greater "drip loss" (water loss), incurring a cost to the processor, since the product is sold on a per pound basis. Low pH pork may also possess a "sour" taste owing to the presence of excessive levels of lactic acid produced during post-mortem glycolysis.

Another major indicator of meat quality in pork is color. Most consumers associate pork quality with a reddish-pink color. For the producer, the Minolta L* color value indicates the quality of the lightness of the meat. For example, a Minolta L* value of 45 indicates a desirable reddish pink hue.

Still another indicator of meat quality is oxidative stability (as measured by the concentration of thiobarbituric acid reactive substances -TBARS - in the meat). Oxidation of the myoglobin pigment and fatty acids can result in color degradation and off-flavors in the meat products.

Research has shown that supplementing animal diets with antioxidants such as alpha-lipoic acid (LA) and alpha-tocopherol acetate (ATA) can enhance meat quality. For example, Berg et al. of the University of Missouri describe the administration of alpha-lipoic acid to swine for improvement of meat quality. They report that lipoic acid had a positive effect on pork quality, observing an increase in loin pH and a decrease in color score (Berg, E., NPPC Project No. 99-164, Final Report, 1999).

Other research indicates that supplementation of vitamin E in the form of alpha-tocopherol acetate (ATA) at supranutritional levels is an effective means for improving meat quality (Faustman and Lynch, New Developments in Vitamin E Nutrition and Meat Quality, presented at Western Nutritional Conference, Saskatoon, Canada, 1998). In addition to improved color, supplementation of animal diet with ATA results in improved stability of membrane bound lipids, maintenance of integrity of cellular membranes, and reduced purge (Monohan, F.J., et al., Food Chem. 1993).

ATA does not, however, provide consistent results, and must be incorporated into the animal diet over a fairly long period of time, depending on the dietary concentration. Supranutritional levels of ATA are sometimes used commercially in cattle feed, though not yet for poultry or swine, owing to an inadequate cost-to-benefit ratio.

Some *in vitro* studies have shown that the lesser known vitamin E compounds, alpha- and gamma-tocotrienol, have greater antioxidant activity than ATA (see, eg., Kamat, J.P. et al, Molecular and Cellular Chemistry, 170 (1-2), 131-138, 1997). Thus, tocotrienols appear to have promise as animal feed supplements.

Tocotrienols, like their chemical cousins the tocopherols, are fat soluble nutrients, but are less widely distributed in nature. The four known tocotrienols are alpha-, beta-, gamma- and delta-tocotrienol. Tocotrienols occur naturally in cereal grains (including barley, corn and rice) and certain vegetable oils such as palm and grapeseed oil. It has been suggested that plants may be genetically modified to enhance their tocotrienol content (see, eg., Subramaniam et al. International PCT Patent Application No. PCT/US01/12334 and Valentin et al. International PCT Patent Application No. PCT/US02/13898).

Published studies of tocotrienols indicate they have potential in preventing and treating a number of conditions, including high cholesterol, arteriosclerosis and liver cancer. For example, it has been suggested that alpha-tocotrienol isolated from barley extract may inhibit cholesterol biosynthesis in animals. Qureshi, A.A. et al., "The Structure of an Inhibitor Of cholesterol Biosynthesis Isolated From Barley", J. Biol. Chem, 261, pp. 10544-50 (1986). Tocotrienols administered intra-peritoneally to guinea pigs have been found to be effective at inhibiting liver HMGCR activity. Khow, H.T. et al, "Effects Of Administration Of Alpha-Tocotrienols And Tocotrienols On Serum Lipids And Liver HMG CoA Reductase Activity", Intl. J. Food Sciences and Nutr., 51 (supplement) (2000).

Despite these and other published studies on the effects of tocotrienols on cholesterol biosynthesis and liver HMGCR activity, applicants are not aware of any published reports on the effect of dietary mixed tocotrienol supplementation on animal tissue (meat) quality, including pH, color and oxidative stability.

Thus it is an object of the present invention to provide a method for improving the tissue quality of an animal.

It is a further object to improve meat tissue, especially its water-holding capacity (as estimated from pH), appearance (as measured by colour), sensory characteristics and oxidative stability.

Further and additional objects will appear from the description and appended claims.

### SUMMARY OF THE INVENTION

The present invention is a method for improving the meat tissue quality of an animal, comprising feeding the animal a diet including mixed tocotrienols (MT) in an amount effective to improve the tissue quality. The diet comprises at least 150 ppm mixed tocotrienols. Meat tissue quality is selected from water-holding capacity, appearance, sensory characteristics and oxidative stability. The quality of animal tissue may be measured as higher pH, improved colour value, lower thiobarbituric acid (TBARS) value or reduced purge. The mixed tocotrienols may be in the form of a distillate obtained from seed processing or a transgenic plant modified to have increased mixed tocotrienol concentration. The animal may be a non-ruminant, such as swine, poultry or fish, or a ruminant, such as cattle or lamb.

The diet should preferably comprise 150 ppm to 300 ppm mixed tocotrienols. The "mixed tocotrienols" may be any mixture that contains at least three of the four known tocotrienols. The diet may also contain alpha-lipoic acid (LA), N-acetylcysteine (NAC) and/or other antioxidants.

### DETAILED DESCRIPTION OF THE INVENTION

The present invention is a novel method for improving the tissue quality of an animal, comprising feeding the animal a diet including mixed tocotrienols (MT) in an amount effective to improve the tissue quality. The diet should preferably comprise 150 ppm to 300 ppm mixed tocotrienols, with 150 ppm to 500 ppm being considered an operable range.

In the examples that follow, meat tissue quality is measured using a number of parameters, including pH, colour score, oxidative stability (TBARS level), sensory values and purge loss. The method has been proven effective with swine, poultry and cattle, and would be expected to be effective with other non- ruminants and ruminants. The improved tissue may comprise any animal tissue, and includes muscle meat, organs, milk and eggs.

"Mixed tocotrienols" refers to any mixture of tocotrienols comprising significant quantities of at least three of the four known tocotrienols. The mixture may contain other components, including alpha tocopherol. Preferably, the mixture contains at least 20% mixed tocotrienols.

Although the feed test trials were conducted on swine and chickens (non-ruminants) and cattle (a ruminant), it is expected that the invention will also be effective on other non-ruminants, such as other poultry and fish, and on other ruminants such as lamb and bison."Other poultry" includes layer hens, turkey, ostriches and emu.

The present invention is further defmed by the following examples. The examples, while indicating a preferred embodiment of the invention, are given by way of illustration only. From the discussion contained herein and the examples themselves, one skilled in the art can ascertain the essential characteristics of the invention and, without departing from the scope thereof, can make changes and modifications to the invention to adapt it to various situations and conditions.

The following abbreviations are used throughout the examples: mixed tocotrienols (MT); alpha-lipoic acid (LA), N-acetylcysteine (NAC); gamma-tocopherol (GT); and thiobarbituric acid reactive substances (TBARS). The feed additive amounts are expressed as weight parts additive per million weight parts feed (ppm).

### EXAMPLE 1

### 2000-2001 Swine Feed Test: Demonstration That Supplementation Of Swine Diet With Mixed Tocotrienols Results In Improved Tissue Quality Parameters

Applicants assessed the effects of antioxidant supplementation on meat quality in an experiment in which pork from pigs fed one of four dietary treatments was compared across three genetic lines differing in carcass leanness and intramuscular fat content. Ninety-six pigs were used in the test, thirty-two in each of the three genetic lines. Swine feeding was initiated in September 2000. At about 80 pounds body weight the 32 pigs of each of the three genetic lines were randomly allotted to individual pens. The pigs were fed corn/soy based diets formulated to provide adequate levels of all nutrients. In addition, one of four dietary treatments was assigned to each pen: control, 1,000 ppm NAC, 500 ppm LA and 150 ppm MT. The MT supplement was obtained commercially from Fuji Chemical Industries (U.S.A.) Inc. of Robbinsville, New Jersey, and contained 7.5% alpha-, 12.3% gamma- and 3.0% delta-tocotrienol (a total tocotrienol content of 22.8%), as well as 7.2% alpha-tocopherol.

The pigs were harvested in November and December 2000 when they had reached an average weight of 260 pounds. Meat tissue quality evaluations occurred on January 28, 2001. At the packing plant individual hot carcass weight, back fat depth and loin depth were measured and lean percent was calculated. Loin pH and loin color value (Minolta L*) were recorded 24 hours post mortem.

The pH results are shown in Table 1 below:

**TABLE 1**

| COMPARISON OF 24 HOUR RAW PORK LOIN pH FOR CONTROL, 1,000 ppm NAC, 500 ppm LA AND 150 ppm MT GROUPS¹ | | | | |
|---|---|---|---|---|
| | *Control* | *1,000 ppm NAC* | *500 ppm LA* | *150 ppm MT* |
| Line 1 - ave. | 5.85^{a} | 6.07^{b} | 6.00^{b} | 6.19^{c} |
| Line 2 - ave. | 5.76^{a} | 5.78^{a} | 5.90^{b} | 5.81^{ab} |
| Line 3 - ave. | 5.69^{a} | 5.93^{c} | 5.99^{c} | 5.81^{b} |
| Overall ave. | 5.77^{a} | 5.93^{b} | 5.99^{b} | 5.94^{b} |
| Increase vs. Control | ------ | 0.16 | 0.20 | 0.17 |

| | | | | |
|---|---|---|---|---|
| ¹Means within a row with unlike superscripts differ (P<0.05). | | | | |

Referring to Table 1, adding 150 ppm mixed tocotrienols to the swine diet increased 24-hour loin pH in the raw pork to 5.94 from the control level of 5.77 averaged across the three genetic lines. A higher pH indicates higher meat quality. Thus, the results indicate that supplementation of swine diet with mixed tocotrienols can improve meat quality.

The effect of dietary supplementation appears to be dependent on pig genetic line. For example, MT supplementation increased loin pH 0.34 in genetic line 1, but only 0.05 in line 2 and 0.12 in line 3, for an average increase of 0.17.

Pork loin pH was also increased when the diet was supplemented with NAC or LA. This suggests that meat quality can be further improved by adding either lipoic acid and/or N-acetylcysteine to the swine diet in addition to the mixed tocotrienols.

Minolta L* color value was measured objectively using a Minolta colorimeter. The Minolta L* value is an indication of the lightness of the pork loin. A lower value indicates a darker color and thus, higher quality. The Minolta L* values are shown in Table 2 below:

**TABLE 2**

| COMPARISON OF RAW PORK LOIN COLOR FOR CONTROL, 1,000 ppm NAC, 500 ppm LA AND 150 ppm MT GROUPS | | | | |
|---|---|---|---|---|
| | *Control* | *1,000 ppm NAC* | *500 ppm LA* | *150 ppm MT* |
| Line 1 -ave. | 51.0 | 49.7 | 52.0 | 49.0 |
| Line 2 - ave. | 52.1 | 53.0 | 50.9 | 51.1 |
| Line 3 - ave. | 55.0 | 49.0 | 49.1 | 49.5 |
| Overall ave. | 52.7 | 50.5 | 50.7 | 49.8 |

Referring to Table 2, supplementation with 150 ppm mixed tocotrienols resulted in a decrease in Minolta L* value. This result further indicates that supplementation of swine diet with mixed tocotrienols can improve meat quality.

### EXAMPLE 2

### 2002 Swine Feed Test: Demonstration That Supplementation Of Swine Diet With Mixed Tocotrienols Improves Pork Equality

Applicants conducted a second swine feeding trial to further determine the effects on meat quality of supplementation of a swine diet with alpha-tocopherol (AT), gamma-tocopherol (GT) or mixed tocotrienols (MT). Seventy-two barrows (-75 lbs.) were transported to the Pioneer Livestock Nutrition Center (PLNC) and randomly placed into individual pens with water and feed provided *ad libitum.* The pigs received a common diet for seven days. On the eighth day the pigs were weighed individually and a uniform group of sixty pigs with an average body weight of about 75 pounds was selected. The pigs were randomly assigned one of five dietary treatments with 12 pigs per treatment. The feeding trial was initiated on March 12, 2002 and ended on June 19, 2002.

The pigs were fed a corn-soybean meal diet formulated to provide adequate levels of all nutrients. In addition, one of five dietary treatments was assigned to each group: control, 300 ppm AT, 450 ppm GT, 150 ppm MT, and 300 ppm MT. To each diet a corn oil premix and a ground corn premix were added with the corn oil premix as a carrier for the supplemental tocopherols and the ground corn premix as the carrier for the MT. The MT supplement was obtained commercially from Fuji Chemical Industries (U.S.A.) Inc. of Robbinsville, New Jersey, and contained 7.5% alpha-, 12.3% gamma- and 3.0% delta-tocotrienol, as well as 7.2% alpha-tocopherol.

The pigs were harvested in June 2002 when they had reached an average weight of about 245 pounds. Following a twelve-hour feed withdrawal, the pigs were transported to a commercial processing facility. At the commercial processing facility, individual hot carcass weight, back fat depth and loin depth were measured and recorded on the day of slaughter. Loin pH, loin color value (Minolta L*), Marbling and fat firmness were recorded 24 hours post mortem. The pH, color score, marbling, fat firmness and Hunter L* results are shown in Table 3 below:

**TABLE 3**

| COMPARISON OF 24 HOUR RAW PORK LOIN QUALITY FOR CONTROL, 300 ppm AT, 450 ppm GT, 150 ppm MT and 300 ppm MT GROUPS¹ | | | | | |
|---|---|---|---|---|---|
| | *Control* | *300 ppm AT* | *450 ppm GT* | *150 ppm MT* | *300 ppm MT* |
| PH, hour 22 | 5.80 | 5.86 | 5.76 | 5.79 | 5.84 |
| Color Score | 3.2 | 3.2 | 3.1 | 3.2 | 3.0 |
| Marbling | 1.9 | 2.1 | 1.9 | 2.0 | 1.8 |
| Fat Firmness | 2.2 | 2.3 | 2.0 | 2.0 | 1.8 |
| Hunter L* | 47.99 | 48.89 | 48.81 | 49.59 | 49.25 |

| | | | | | |
|---|---|---|---|---|---|
| ¹Means within a row with unlike superscripts differ (P<0.05). | | | | | |

Referring to Table 3, adding 150 ppm mixed tocotrienols to the swine diet did not significantly change the loin pH, although loin pH did increase (to 5.84 compared to 5.80) with the addition of 300 ppm MT to the diet. Color score, marbling, fat firmness and Hunter L* value were not significantly different in the loin samples from the pigs whose diet was supplemented with mixed tocotrienols compared to loin samples from the control group. These results were surprising in view of the results obtained in the 2000-2001 swine feeding test (Example 1), where the addition of 150 ppm mixed tocotrienols significantly increased loin pH (Table 1). The varying results between the 2000-2001 and the 2002 swine feed tests could be a function of differing pig genetics or meat handling.

Trimmed bellies were collected to measure the effects of dietary treatments on ground pork oxidation rate. The bellies were ground through a meat grinder and mixed. Four one-pound samples of each ground belly were placed on a retail meat tray and covered with oxygen permeable film. On each of days 1, 7, 10 and 16 post-grinding, one of the trays was opened and a sample submitted for TBARS (thiobarbituric acid reactive substances) determination, a measure of the extent of oxidation. The results are given in Table 4 below.

**TABLE 4**

| COMPARISON OF FAT AND TBARS CONTENT OF RAW GROUND PORK FOR CONTROL, 300 ppm AT, 450 ppm GT, 150 ppm MT and 300 ppm MT GROUPS¹ | | | | | |
|---|---|---|---|---|---|
| | *Control* | *300 ppm AT* | *450 ppm GT* | *150 ppm MT* | *300 ppm MT* |
| Fat, % | 38.27 | 37.31 | 37.59 | 38.45 | 38.78 |

| mg Malonaldehyde ²/kg sample | | | | | |
|---|---|---|---|---|---|
| Day 1 | 0.16 | 0.13 | 0.19 | 0.18 | 0.11 |
| Day 7 | 0.29 | 0.18 | 0.17 | 0.18 | 0.14 |
| Day 10 | 0.49 | 0.34 | 0.32 | 0.41 | 0.41 |
| Day 16 | 2.12^{a} | 1.46^{ab} | 1.01^{b} | 1.17^{b} | 1.95^{a} |

| | | | | | |
|---|---|---|---|---|---|
| ¹Means within a row with unlike superscripts differ (P<0.1). ²Malonaldehyde is a TBARS. | | | | | |

From Table 4 it can be seen that adding 150 ppm MT to the dietary feed lowered oxidation as measured by TBARS concentration in the ground pork on days 7, 10 and 16 compared to the TBARS concentration of the control group. On day 16, the TBARS concentration was significantly lower (1.17 versus 2.12). TBARS concentration trended lower on all days for the ground pork from the swine fed 300 MT compared to the control group. These results indicate that supplementation of swine diet with mixed tocotrienols lowers oxidation in ground pork, thus improving its quality and increasing its shelf life.

Approximately twenty-one days after slaughter the loins were removed from vacuum bags and weighed. The liquid that had accumulated in the bags during storage was measured to calculate 21-day purge. Loin pH was measured at three locations by carefully inserting a glass probe into the mid-point of the anterior, mid and posterior thirds of each loin. As expected, measurement location (blade, chop or shoulder) affected loin pH, Hunter L, L* and a* values. The data is summarized in Table 5 below.

**TABLE 5**

| COMPARISON OF 21-DAY RAW PORK LOIN QUALITY MEASUREMENTS FOR CONTROL, 300 ppm AT, 450 ppm GT, 150 ppm MT and 300 ppm MT GROUPS¹ | | | | | |
|---|---|---|---|---|---|
| | *Control* | *300 ppm AT* | *450 ppm GT* | *150 ppm MT* | *300 ppm MT* |
| Loin purge, % | 1.03 | 0.99 | 1.16 | 0.64 | 0.61 |
| Loin pH² | 5.62 | 5.66 | 5.67 | 5.68 | 5.61 |
| Chop purge, % | 2.65 | 1.97 | 2.40 | 2.45 | 2.95 |
| Cooking Loss, % | 21.17 | 20.11 | 20.27 | 20.11 | 21.05 |
| Instron force, kg | 5.50^{a} | 4.98^{b} | 5.53^{a} | 5.25^{ab} | 5.05^{b} |
| Hunter L² | 46.22 | 46.68 | 45.47 | 46.51 | 46.58 |
| Hunter a | 5.83 | 5.71 | 6.00 | 5.89 | 6.06 |
| Hunter b | 8.51 | 8.60 | 8.41 | 8.58 | 8.63 |
| Hunter L^{*2} | 53.27 | 53.86 | 52.53 | 53.44 | 53.59 |
| Hunter a *2 | 6.93 | 6.76 | 7.14 | 6.98 | 7.19 |
| Hunter b* | 15.59 | 15.77 | 15.61 | 15.71 | 15.88 |

| | | | | | |
|---|---|---|---|---|---|
| ¹Means within a row with unlike superscript differ (P<0.10). ²Location effect (P<0.05). Measurements made on blade, center and sirloin areas. | | | | | |

From Table 5 it can be seen that pork from the group fed 150 ppm MT had lower loin purge after 21 days than pork from the control group (0.64% versus 1.03%), indicating an improvement in meat quality. A lower purge level indicates a higher water holding capacity, which results in a juicier, more tender product. Loin purge was even lower (0.61 %) when the swine diet was supplemented with 300 ppm MT.

The mean loin pH was 0.06 higher for the group fed 150 ppm MT than the loin pH of the control group, also indicating improved tissue quality from the dietary addition of mixed tocotrienols. The difference in pH of 0.06 is economically important but, due to the small number of pigs tested, was not statistically significant.

Chop purge was lower for chops obtained from the swine fed 150 ppm MT compared to the control group, but the difference was not statistically significant. Likewise, loin tenderness (as measured by the force required to pierce the loin chop as measured on an Instron Corporation test instrument) improved in the swine fed 150 ppm MT compared to the control group, and was better still in the swine fed 300 ppm MT, but the differences were not statistically significant.

The Hunter L, a and b values were measured with a Hunter laboratory system for color evaluation. Hunter L is a measurement of the lightness of an object, and may be thought of as the light reflectance from the surface of an object. Thus, a higher Hunter L value indicates a lighter color, and an L value of 100 would indicate prefect reflectance from the surface. (The white standard has an L value of 97.21.) An increasingly positive Hunter a value indicates a redder color, and an increasingly positive Hunter b value indicates a more yellow color. No statistically significant differences were observed for any of the Hunter color values for loin chops from swine of different dietary treatments compared 21 days after slaughter.

Hunter L and L* values trended upward for the swine fed MT compared to the control group, indicating a slightly lighter colored chop. This result was somewhat surprising, since the Minolta L* values decreased for the swine fed MT compared to the control group in the 1999-2000 swine feeding test (see Table 2). A slight increase in Hunter a and a* values indicated a redder (and thus improved) product from the swine fed mixed tocotrienols compared to the control group. Hunter b and b* values also trended higher for the swine fed MT compared to the control group, indicating a more yellow chop. A more yellow chop is a deviation from the normal gray that is considered ideal for pork chops.

A one-inch thick chop was collected from the 10^{th} rib region of each pig carcass to evaluate the effects of dietary treatment on cooked product characteristics. Sensory evaluation was conducted using a trained sensory panel. Each panelist evaluated a ½ inch cube removed from the center of a cooked pork chop immediately after reaching 71 degrees C. Samples were evaluated for degree of juiciness, tenderness, chewiness, pork flavor and off-flavor intensity. The results are shown in Table 6 below.

**TABLE 6**

| COMPARISON OF SENSORY CHARACTERISTICS OF COOKED PORK LOIN CHOPS FOR CONTROL, 300 ppm AT, 450 ppm GT, 150 ppm MT and 300 ppm MT GROUPS^{1,3} | | | | | |
|---|---|---|---|---|---|
| Sensory Attribute¹ | *Control* | *300 ppm AT* | *450 ppm GT* | *150 ppm MT* | *300 ppm MT* |
| Juiciness² | 5.3 | 6.0 | 5.4 | 6.0 | 5.8 |
| Tenderness | 7.4 | 7.8 | 7.3 | 7.9 | 7.4 |
| Chewiness² | 2.7 | 2.3 | 2.5 | 2.2 | 2.4 |
| Pork Flavor | 1.7 | 1.8 | 1.8 | 1.6 | 1.6 |
| Off-flavor | 3.9 | 4.3 | 3.9 | 4.3 | 4.3 |

| | | | | | |
|---|---|---|---|---|---|
| ¹Means within a row with unlike superscript differ (P<0.05). ²Panelist effect. ³Sensory attributes analyzed on a scale of 1 to 10, with 1 indicating the least presence of an attribute and 10 indicating the greatest presence | | | | | |

As shown in Table 6, juiciness and tenderness scores improved in the pork from the swine fed 150 ppm MT compared to pork from the control group. Pork flavor was not significantly affected by feed supplementation with MT.

These two examples demonstrate that supplementation of swine diet with mixed tocotrienols improves the tissue quality of swine. In particular, supplementation with 150 ppm mixed tocotrienols resulted in increased pH (Tables 1 and 5), improved color (Tables 2 and 5), improved oxidative stability (Table 4) and decreased drip loss (Table 5), among other improvements. It is expected that these improvements would be realized in other non-ruminants and in ruminants such as beef cattle.

### EXAMPLE 3

### 2002 Poultry Feed Test: Demonstration That Supplementation Of Poultry Diet With Mixed Tocotrienols Results In Improved Tissue Quality Parameters

Applicants also assessed the effects of antioxidant supplementation on meat quality in an experiment in which meat from chickens fed one of four dietary treatments was compared. On July 25, 2002, day-old chicks were obtained from a commercial company. The birds were housed in a brooder until August 11, 2002. On August 11, forty-eight birds were randomly allocated to one of four pens (twelve birds per pen). Birds in each pen were offered ad libitum access to one of four treatment diets: control, 300 ppm AT, 300 ppm GT or 150 ppm MT. The MT premix contained a commercially available MT supplement (7.5% alpha-, 12.3% gamma- and 3.0% delta-tocotrienol and 7.2% alpha-tocopherol) mixed with ground corn as the carrier. The total MT premix (ground corn plus MT supplement) represented 2.5% w/w of the finished MT supplemented feed.

On September 13, 2002 (seven weeks of age) the birds were harvested, identified and frozen at -20C. The birds were stored frozen at -20C for 136-159 days post slaughter. On days 136, 156, 157, 158 and 159 (where available) two birds per dietary treatment were thawed in cold water. Meat was removed from the breasts (pectoralis major muscles) and thighs. Breast meat from each chicken was ground through a 3mm disc in a Krups Butcher Shop 150W Professional Power Meat Grinder. Thigh meat from two chickens was combined (for days 156, 157, 158 and 159; day 136 thigh meat was kept separate for each bird) and ground in a similar manner. Patties were made (100g for breast; 60g for thighs) using a 100x15mm Petri dish as a mold.

Patties were quartered and each quarter was stored at 2.2C for a designated period of time. One quarter was used per sampling period. Sampling periods for the raw ground meat were day 0, day 3, day 7 and day 10. Thiobarbituric acid reacting substances (TBARS) analyses was performed on the raw ground chicken breasts and thighs according to the procedure of Ahn, D.U., D.G. Olson, C.Jo, X. Chen, C. Wu, and J.I. Lee, "Effect of Muscle Type, Packaging, and Irradiation on Lipid Oxidation, Volatile Production and Color in Raw Pork Patties", Meat Sci. 49:27-39 (1998). The results for the raw ground chicken breasts and thighs are shown in the following tables.

**TABLE 7**

| COMPARISON OF TBARS CONTENT OF RAW GROUND CHICKEN BREASTS FOR CONTROL, 300 ppm AT, 300 ppm GT and 150 ppm MT GROUPS¹ | | | | |
|---|---|---|---|---|
| | *Control* | *300 ppm AT* | *300 ppm GT* | *150 ppm MT* |
| mg Malonaldehyde²/kg sample | | | | |
| Day 0 | 0.1360 | 0.4569 | 0.3022 | 0.1780 |
| Day 3 | 0.1690 | 0.1214 | 0.1926 | 0.1258 |
| Day 7 | 0.2152 | 0.1243 | 0.0860 | 0.1054 |
| Day 10 | 0.4686^{a} | 0.1151^{b} | 0.1428^{b} | 0.1227^{b} |

| | | | | |
|---|---|---|---|---|
| ¹Values within a row with unlike superscripts differ (P<0.1). ²Malonaldehyde is a TBARS. | | | | |

From Table 7 it can be seen that TBARS concentration trended lower on days 3, 7 and 10 for the ground breasts from the birds fed 150 ppm MT compared to the control group. On day 10, the TBARS concentration was significantly lower (0.1227 versus 0.4686). These results indicate that supplementation of poultry diet with mixed tocotrienols lowers oxidation in ground chicken breasts, thus improving its quality and increasing its shelf life.

**TABLE 8**

| COMPARISON OF TBARS CONTENT OF RAW GROUND CHICKEN THIGHS FOR CONTROL, 300 ppm AT, 300 ppm GT and 150 ppm MT GROUPS¹ | | | | |
|---|---|---|---|---|
| | *Control* | *300 ppm AT* | *300 ppm GT* | *150 ppm MT* |
| mg Malonaldehyde¹/kg sample | | | | |
| Day 0 | 0.2704 | 0.3438 | 0.2493 | 0.2969 |
| Day 3 | 0.4155 | 0.1810 | 0.2010 | 0.2581 |
| Day 7 | 0.5147 | 0.2448 | 0.1626 | 0.4818 |
| Day 10 | 0.9125 | 0.4482 | 0.3557 | 0.3336 |

| | | | | |
|---|---|---|---|---|
| ¹Malonaldehyde is a TBARS. | | | | |

From Table 8 it can be seen that TBARS concentration trended lower on days 3, 7 and 10 for the ground thighs from the birds fed 150 ppm MT compared to the control group.

Raw ground chicken breast and thigh patties were cooked in a pre-warmed George Foreman grill for five minutes per breast patty and four minutes per thigh patty. Cooked patties were allowed to cool under refrigeration and then quartered (day 136) or halved (days 156, 157, 158 and 159). Each quarter or half was stored at 2.2C in zip lock baggies for a designated period of time. One quarter was used per sampling period. Sampling periods were 0 hours, 4 hours, 26 hours and 48 hours. Thiobarbituric acid reacting substances (TBARS) analyses was performed according to Ahn et al., and the results are shown in the following two tables.

**TABLE 9**

| COMPARISON OF TBARS CONTENT OF COOKED GROUND CHICKEN BREASTS FOR CONTROL, 300 ppm AT, 300 ppm GT and 150 ppm MT GROUPS¹ | | | | |
|---|---|---|---|---|
| Time | *Control* | *300 ppm AT* | *300 ppm GT* | *150 ppm MT* |
| mg Malonaldehyde ²/kg sample | | | | |
| 0 hours | 0.4374 | 0.3067 | 0.3809 | 0.3711 |
| 4 hours | 0.9379^{a} | 0.4354^{b} | 0.3443^{b} | 0.4285^{b} |
| 26 hours | 1.7089^{a} | 0.3366^{b} | 0.4559^{b} | 0.7762^{b} |
| 48 hours | 2.2616^{a} | 0.4433^{b} | 0.6120^{b} | 0.9256^{b} |

| | | | | |
|---|---|---|---|---|
| ¹Values within a row with unlike superscripts differ (P<0.1). ²Malonaldehyde is a TBARS. | | | | |

From Table 9 it can be seen that TBARS concentration was significantly lower for the cooked ground chicken breast patties from the birds fed 150 ppm MT compared to the control group at three of the four sampling times(0.4285 vs. 0.9379 at 4 hours; 0.7762 vs. 1.7089 at 26 hours; and 0.9256 vs. 2.2616 at 48 hours). These results indicate that supplementation of poultry diet with mixed tocotrienols lowers oxidation in cooked ground chicken breasts, thus improving its quality, increasing its shelf life, and reducing warmed over flavor (WOF) of the cooked meat.

**TABLE 10**

| COMPARISON OF TBARS CONTENT OF COOKED GROUND CHICKEN THIGHS FOR CONTROL, 300 ppm AT, 300 ppm GT and 150 ppm MT GROUPS | | | | |
|---|---|---|---|---|
| Time | *Control* | *300 ppm AT* | *300 ppm GT* | *150 ppm MT* |
| mq Malonaldehyde¹ /kg sample | | | | |
| 0 hours | 0.8949^{a} | 0.4568^{b} | 0.4839^{b} | 0.5935^{b} |
| 4 hours | 1.8795^{c} | 0.8954^{d} | 0.6715^{d} | 0.8239^{d} |
| 26 hours | 3.4659^{c} | 0.8968^{d} | 1.2515^{d} | 1.4715^{d} |
| 48 hours | 4.5544^{c} | 1.1669^{d} | 1.6312^{d} | 1.8504^{d} |

| | | | | |
|---|---|---|---|---|
| ^{ab}Values within a row with unlike superscripts differ (P<0.1). ^{cd}Values within a row with unlike superscripts differ (P<0.01). ¹Malonaldehyde is a TBARS. | | | | |

From Table 10 it can be seen that TBARS concentration was significantly lower (P<0.1) immediately after cooking and cooling for the cooked ground chicken thigh patties from birds fed 150 ppm MT compared to the control group (0.5935 vs. 0.8949). At each subsequent sampling time, the TBARS concentration was also significantly lower (P<0.01) for the cooked chicken thigh patties from birds fed 150 ppm MT compared to the control group (0.8239 vs. 1.8795 at 4 hours; 1.4715 vs. 3.4659 at 26 hours; and 1.8504 vs. 4.5544 at 48 hours). These results also indicate that supplementation of poultry diet with mixed tocotrienols lowers oxidation in cooked ground chicken thighs, thus improving its quality, increasing its shelf life, and reducing warmed over flavor (WOF) of cooked meat.

### EXAMPLE 4

### 2002-03 Cattle Feed Test: Demonstration That Supplementation Of Cattle Diet With Mixed Tocotrienols Results In improved Tissue Quality Parameters

Applicants also assessed the effects of antioxidant supplementation on beef quality in an experiment in which ground beef and steaks from cattle fed one of four dietary treatments were compared. Forty steers (average weight 1082 lbs.) were blocked by weight (heavy or light) and assigned to eight outdoor group pens. Pens were randomly assigned within weight blocks to four dietary treatments (two pens per dietary treatment): control, 300 ppm gamma-tocopherol, 150 ppm MT or 300 ppm MT. As in the swine and poultry feed trials, the MT supplement was obtained commercially from Fuji Chemical Industries (U.S.A.) Inc. of Robbinsville, New Jersey, and contained 7.5% alpha-, 12.3% gamma- and 3.0% delta-tocotrienol for a total MT content of 22.8 wt%, as well as 7.2% alpha-tocopherol. The control diet was not supplemented with even the NRC (1996) recommended level of vitamin E (15 to 60 ppm).

The steers were fed rolled corn diets with added cottonseed hulls that contained little or no vitamin E. The corn grain used in this trial was more than two years old so that it would be largely depleted of vitamin E. The steers were gradually adapted to an 80% grain-based diet and fed the low vitamin E diet for over one month prior to the start of the dietary supplementation period. Steers then were fed their respective dietary treatments for 54 days, starting December 18, 2002 and ending February 10, 2003.

The dietary treatments were top-dressed onto the feed and mixed with the morning daily feed. The target level for feeding gamma-tocopherol was calculated to be 2 g per animal per day. Mineral oil was used as a carrier for the gamma-tocopherol. The two target amounts of mixed tocotrienols were equivalent to, or half of, the gamma tocopherol level. The MT compounds were diluted with cornmeal to supply the required amount of mixed tocotrienols.

At the end of the feeding trial thirty-nine of the forty steers were transported to Emporia, KS for harvest at the IBP Packing Plant. Carcass data and full rib sections were obtained from the left half of thirty-eight carcasses. The beef rib sections were transported to Kansas State University (where the beef quality analyses were to take place) and placed in a cooler (2°C) for overnight storage.

Four pounds of lean and one pound of fat were harvested from each steer and mixed to produce ground beef patties with a targeted fat content of 20%. The patties were frozen and then vacuum-packaged for storage. A one-pound package was displayed under retail conditions at 34 ± 3°F under 1614 lux (150 ± 5 foot candles) light intensity in open-top display cases for 5 days. The pre- and post-display ground beef patties were analyzed for oxidative stability by determining their TBARS concentration. The results are shown in Table 11 below.

**TABLE 11**

| COMPARISON OF MOISTURE, FAT AND TBARS CONTENT OF RAW GROUND BEEF PATTIES FOR CONTROL, GT, 150 ppm MT and 300 ppm MT GROUPS¹ | | | | |
|---|---|---|---|---|
| | *Control* | *300 ppm GT* | *150 ppm MT* | *300 ppm MT* |
| Moisture. % | 59.56 | 58.99 | 59.33 | 57.83 |
| Fat, % | 20.11 | 20.71 | 20.27 | 22.08 |

| Mg Malonaldehyde/1000 g ground beef² | | | | |
|---|---|---|---|---|
| Pre-display | 0.184 | 0.173 | 0.150 | 0.169 |
| Post-display | 0.815^{a} | 0.663^{ab} | 0.423^{b} | 0.504^{b} |

| | | | | |
|---|---|---|---|---|
| ¹Means within a row with unlike superscripts differ (P<0.05). ²Malonaldehyde is a TBARS. | | | | |

Referring to Table 11, moisture and fat concentrations in ground beef from steers fed 300 ppm MT were numerically lower and higher, respectively, than moisture and fat concentrations in ground beef from steers fed any other dietary treatment. Pre-display TBARS values were similar across the four dietary treatment groups. However, analysis of ground beef post-display shows significantly lower TBARS concentration in ground beef from steers fed either 150 ppm MT or 300 ppm MT compared to ground beef from the control group, indicating that supplementation of the cattle diet with mixed tocotrienols decreases oxidation in ground beef over time, thus improving its quality and increasing its shelf life.

On the day following delivery of the beef rib sections to Kansas State University, ribs were boned out, vacuum packaged, and held at approximately (2°C) until thirteen days postmortem, at which time the ribs were faced at the 13^{th} rib region. The ribs were cut into 2.54 cm thick ribeye steaks, one steak from each rib to be used for color appraisal under retail display conditions and one steak for sensory evaluation. The steaks for sensory evaluation were vacuum-packaged and frozen.

The ribeye steaks utilized for color evaluation were placed onto 17S foam trays with meat, fish, and poultry pads (Dri-Loc AC-50) and wrapped with polyvinyl chloride film. The packaged steaks were placed under simulated retail display at 34 ± 3°F under 1614 lux (150 ± 5 foot candles) light intensity in open-top display cases. The cases were programmed to defrost twice daily at 12-hour intervals. Case temperature was monitored using temperature recorders. An eight-member trained panel assigned subjective color and discoloration scores on days 0, 1, 2, 3, 4, 5 and 7. Pre-storage color was evaluated on an eight point scale. Panelists evaluated post-13 day storage color using a five-point scale with 0.5 intervals. Minolta color measurements were taken on days 0 and 7 using a Hunter Lab MiniScan™ Spectrophotometer (1.25 inch diameter aperture). The color results are shown in Tables 12 and 13 below.

**TABLE 12**

| COMPARISON OF RAW RIBEYE STEAK SUBJECTIVE COLOR FOR CONTROL, GT, 150 ppm MT AND 300 ppm MT GROUPS¹ | | | | |
|---|---|---|---|---|
| Evaluation day | *Control* | *300 ppm GT* | *150 ppm MT* | *300 ppm MT* |
| Pre-storage² | 4.61 | 4.34 | 4.34 | 4.23 |

| Post-13 day storage period³ | | | | |
|---|---|---|---|---|
| Day 0 | 2.37 | 2.19 | 2.21 | 2.10 |
| Day 1 | 2.57 | 2.28 | 2.35 | 2.30 |
| Day 2 | 2.60 | 2.29 | 2.39 | 2.33 |
| Day 3 | 2.90 | 2.61 | 2.59 | 2.56 |
| Day 4 | 3.18^{a} | 2.80^{b} | 2.77^{b} | 2.69^{b} |
| Day 5 | 3.43^{a} | 3.02^{b} | 2.90^{b} | 2.99^{b} |
| Day 7 | 3.99^{a} | 3.29^{b} | 3.18^{b} | 3.18^{b} |

| | | | | |
|---|---|---|---|---|
| ¹Means within a row with unlike superscripts differ (P<0.05). ²Evaluation made at time of packaging. Color evaluation scale: 1.0 = Bleached red; 2.0 = Very light cherry red; 3.0 = Moderately light cherry red; 4.0 = Cherry red; 5.0 = Slightly dark red; 6.0 = Moderately dark red; 7.0 = Dark red; 8.0 = Very dark red. ³Color evaluation scale: 1.0 = Very bright cherry red; 2.0 = Bright cherry red; 3.0 = Slightly dark red to tannish red; 4.0 = Moderately dark red to brown; 5.0 = Very dark red/purple to brown. | | | | |

Referring to Table 12, color scores on days 0, 1 and 2 were not significantly affected by dietary treatment despite numerically higher (less desirable) values for steaks from cattle fed the control diet. On day 3, color scores tended (P≤ 0.10) to improve for steaks from steers whose diets were supplemented with the antioxidants GT or MT. Color improvements for steaks from steers fed antioxidant-supplemented diets became more pronounced on successive days of display. These results indicate that feeding mixed tocotrienols to cattle can increase shelf life of ribeye steaks by about two days.

**TABLE 13**

| COMPARISON OF RAW RIBEYE STEAK HUNTER LAB COLOR EVALUATION FOR CONTROL, GT, 150 ppm MT AND 300 ppm MT GROUPS¹ | | | | |
|---|---|---|---|---|
| Item | *Control* | *300 ppm GT* | *150 ppm MT* | *300 ppm MT* |
| Pre-display pH | 5.55 | 5.53 | 5.54 | 5.55 |

| Hunter L | | | | |
|---|---|---|---|---|
| Day 0 | 39.56 | 41.35 | 40.54 | 41.26 |
| Day 7 | 37.37^{a} | 40.03^{b} | 39.84^{b} | 40.49^{b} |
| Hunter a | | | | |
| Day 0 | 32.42 | 32.82 | 33.13 | 32.60 |
| Day 7 | 27.27^{a} | 30.26^{b} | 32.31^{c} | 31.22^{bc} |

| Hunter b | | | | |
|---|---|---|---|---|
| Day 0 | 25.13 | 25.33 | 25.51 | 25.08 |
| Day 7 | 21.38^{a} | 23.35^{b} | 24.78^{b} | 24.01^{b} |

| | | | | |
|---|---|---|---|---|
| ¹Means within a row with unlike superscripts differ (P<0.05). | | | | |

As shown in Table 13, Hunter L, a and b values for raw ribeye steaks on day 0 were not significantly different between dietary treatment groups. Day 7 Hunter L, a and b values were higher and closer to their day 0 values for steaks from cattle fed antioxidants than steaks from cattle fed the control diet, indicating that less deterioration took place during the display period.

TBARS analysis was performed on pre- and post-display ribeye steaks. The results are given in Table 14 below.

**TABLE 14**

| COMPARISON OF TBARS CONTENT OF RAW RIBEYE STEAKS FOR CONTROL, GT, 150 ppm MT and 300 ppm MT GROUPS¹ | | | | |
|---|---|---|---|---|
| | *Control* | *300 ppm GT* | *150 ppm MT* | *300 ppm MT* |
| Mg Malonaldehyde/1000 gsteak² | | | | |
| Pre-display | 0.080 | 0.076 | 0.074 | 0.076 |
| Post-display | 0.881^{a} | 0.411^{b} | 0.186^{c} | 0.185^{c} |

| | | | | |
|---|---|---|---|---|
| ¹Means within a row with unlike superscripts differ (P<0.05). ²Malonaldehyde is a TBARS. | | | | |

A beef sample with a TBARS over about 0.2 mg/kg has an increased rancidity and often exhibits an undesirable flavor. Referring to Table 14, steaks from all dietary treatments had similar, acceptable TBARS concentrations at the start of the display period. However, post-display, TBARS concentrations were significantly lower (better) for steaks from steers whose diets were supplemented with gamma-tocopherol or mixed tocotrienols, with steaks from steers fed mixed tocotrienols being significantly lower than steaks from steers fed gamma tocopherol. These data indicate that supplementation of cattle diet with mixed tocotrienols improves the shelf life of the meat over that of cattle fed a non-supplemented diet and cattle fed a diet supplemented with only gamma-tocopherol.

The frozen ribeye steaks designated for sensory evaluation were thawed for >24 hours at 3-4°C and cooked in a Blodgett oven set at 163°C. The steaks were turned at 40°C and removed from the oven at 70°C. The cooked steaks were cut into 2.54 cm x 1.25 cm x 1.25 cm cubes. The cubes were placed in double boilers and held warm on burners set at 107°C until serving. Each panelist received two cubes in random order with a maximum of eight samples per session. An eight-point scale with 0.5 increments was used to score sensory attributes, with 8 being most tender, flavorful, or juicy and 1 being the least tender, flavorful, or juicy. The results are shown in Table 15 below.

**TABLE 15**

| COMPARISON OF SENSORY CHARACTERISTICS OF COOKED RIBEYE STEAKS FOR CONTROL, GT, 150 ppm MT and 300 ppm MT GROUPS¹ | | | | |
|---|---|---|---|---|
| Sensory Attribute¹ | *Control* | *300 ppm GT* | *150 ppm MT* | *300 ppm MT* |
| Freshly cooked² | | | | |
| Juiciness | 5.6 | 5.7 | 5.6 | 5.6 |
| Flavor intensity | 5.8 | 5.9 | 5.7 | 6.0 |
| Warmed over flavor | 7.9 | 8.0 | 7.9 | 8.0 |
| Off-flavor intensity | 7.8 | 7.7 | 7.7 | 7.8 |
| Overall tenderness | 5.8^{ab} | 6.1^{a} | 5.3^{b} | 5.9^{b} |

| | | | | |
|---|---|---|---|---|
| ¹Means within a row with unlike superscript differ (P<0.05). ²Scored on a scale of 1 to 8 with 1 being least desirable and 8 being most desirable. | | | | |

As shown in Table 15, juiciness, flavor intensity, warmed-over flavor and off-flavor intensity attributes were not significantly affected by dietary treatment. Overall tenderness scores were higher for steaks from steers fed gamma tocopherol than for steaks from steers fed 150 ppm or 300 ppm mixed tocotrienols.

Thus it has been demonstrated that supplementation of animal diet with mixed tocotrienols results in improved tissue quality, particularly as measured by pH, color, oxidative stability and purge loss. Both 150 ppm MT and 300 ppm MT have been shown to significantly improve tissue quality. The mixed tocotrienols may be fed to the animal alone or in combination with other plant phenolics, including but not limited to tocopherols; phenylpropanoids such as ferulic acid, caffeic acid and sinapic acid; and flavonoids such as quercetin, catechins, anthocyanidins and isoflavonoids. The mixed tocotrienols may also be fed in combination with alpha lipoic acid and N-acetylcysteine. The improvements have been demonstrated on swine, poultry and cattle, and can be expected to occur with other ruminants and non-ruminants.

Other modifications and alternative embodiments of the invention are contemplated which do not depart from the scope of the invention as defined by the foregoing teachings and appended claims. It is intended that the claims cover all such modifications that fall within their scope.

## Claims

1. A method of improving the meat quality of an animal, comprising feeding the animal a diet comprising at least 150 ppm mixed tocotrienols, wherein the meat quality is selected from water-holding capacity, appearance, sensory characteristics and oxidative stability.

2. The method of claim 1 wherein the quality of the meat is measured by criteria selected from increased pH, improved colour value, lowered thiobarbituric acid reactive substance (TBARS) value and reduced purge.

3. The method of claim 1 wherein the diet further comprises alpha-lipoic acid.

4. The method of claim 3 wherein the level of alpha-lipoic acid is at least 500 ppm.

5. The method of claim 1 wherein the diet further comprises N-acetylcysteine.

6. The method of claim 5 wherein the level of N-acetylcysteine is at least 1,000 ppm.

7. The method of claim 1 wherein the diet further comprises alpha-lipoic acid and N-acetylcysteine.

8. The method of claim 1 wherein the animal is a non-ruminant.

9. The method of claim 8 wherein the animal is swine.

10. The method of claim 9 wherein the mixed tocotrienols are introduced into the diet after the swine reaches about 80 pounds body weight.

11. The method of claim 8 wherein the animal is poultry.

12. The method of claim 1 wherein the animal is a ruminant.

13. The method of claim 12 wherein the animal is cattle.

14. The method of claim 1 wherein the diet comprising at least 150 ppm mixed tocotrienols comprises a cereal grain crop genetically modified to have elevated mixed tocotrienol levels.

15. The method of claim 14 wherein the cereal grain crop is corn.

16. The method of claim 1 wherein the diet comprising at least 150 ppm mixed tocotrienols comprises oil from a plant that has been genetically modified to have elevated mixed tocotrienol levels.

17. The method of claim 1 wherein the mixed tocotrienols comprise a mixture of alpha-, gamma- and delta-tocotrienols.

18. The method of claim 1 wherein the diet further comprises another plant phenolic.

19. The method of claim 18 wherein the plant phenolic is selected from the group consisting of alpha-tocopherol, beta-tocopherol, gamma-tocopherol, delta- tocopherol, ferulic acid, caffeic acid, sinapic acid, quercetin, catechins, anthocyanidins and isoflavonoids.

20. The method of claim 1, wherein the diet comprises 150 ppm to 300 ppm mixed tocotrienols.

21. The method of claim 20 wherein the quality of the meat is measured by criteria selected from increased pH, improved colour value, lowered thiobarbituric acid reactive substance (TBARS) value and reduced purge.

22. The method of claim 20 wherein the diet further comprises alpha-lipoic acid.

23. The method of claim 22 wherein the level of alpha-lipoic acid is at least 500 ppm.

24. The method of claim 20 wherein the diet further comprises N- acetylcysteine.

25. The method of claim 24 wherein the level of N-acetylcysteine is at least 1,000 ppm.

26. The method of claim 20 wherein the diet further comprises alpha-lipoic acid and N-acetylcysteine.

27. The method of claim 20 wherein the diet comprising 150 ppm to 300 ppm mixed tocotrienols comprises a cereal grain crop genetically modified to have elevated mixed tocotrienol levels.

28. The method of claim 27 wherein the cereal grain crop is corn.

29. The method of claim 20 wherein the diet comprising 150 ppm to 300 ppm mixed tocotrienols comprises an oil from a plant that has been genetically modified to have elevated mixed tocotrienol levels.

30. The method of claim 20 wherein the mixed tocotrienols comprise a mixture of alpha-, gamma- and delta-tocotrienols.

31. The method of claim 20 wherein the diet further comprises another plant phenolic.

32. The method of claim 31 wherein the plant phenolic is selected from the group consisting of alpha-tocopherol, beta-tocopherol, gamma-tocopherol, delta-tocopherol, ferulic acid, caffeic acid, sinapic acid, quercetin, catechins, anthocyanidins and iso flavono ids.

## Patentansprüche

1. Verfahren zur Verbesserung der Fleischqualität eines Tiers, wobei das Verfahren aufweist: Füttern des Tiers mit einer Diät, die mindestens 150 ppm gemischte Tocotrienole enthält, wobei die Fleischqualität unter Wasserhaltevermögen, Aussehen, sensorischen Eigenschaften und Oxidationsbeständigkeit ausgewählt ist.

2. Verfahren nach Anspruch 1, wobei die Qualität des Fleischs nach Kriterien gemessen wird, die unter erhöhtem pH-Wert, verbessertem Farbwert, niedrigerem Wert für thiobarbitursäurereaktive Substanzen (TBARS-Wert) und reduzierter Spülung ausgewählt sind.

3. Verfahren nach Anspruch 1, wobei die Diät ferner α-Liponsäure aufweist.

4. Verfahren nach Anspruch 3, wobei der α-Liponsäuregehalt mindestens 500 ppm beträgt.

5. Verfahren nach Anspruch 1, wobei die Diät ferner N-Acetylcystein aufweist.

6. Verfahren nach Anspruch 5, wobei der N-Acetylcystein-Gehalt mindestens 1000 ppm beträgt.

7. Verfahren nach Anspruch 1, wobei die Diät ferner α-Liponsäure und N-Acetylcystein aufweist.

8. Verfahren nach Anspruch 1, wobei das Tier kein Wiederkäuer ist.

9. Verfahren nach Anspruch 8, wobei das Tier ein Schwein ist.

10. Verfahren nach Anspruch 9, wobei die gemischten Tocotrienole in die Diät eingebracht werden, nachdem das Schwein ein Körpergewicht von etwa 80 lbs erreicht.

11. Verfahren nach Anspruch 8, wobei das Tier Geflügel ist.

12. Verfahren nach Anspruch 1, wobei das Tier ein Wiederkäuer ist.

13. Verfahren nach Anspruch 12, wobei das Tier ein Rind ist.

14. Verfahren nach Anspruch 1, wobei die mindestens 150 ppm gemischte Tocotrienole enthaltende Diät eine Getreidekornfrucht aufweist, die genetisch so modifiziert ist, dass sie erhöhte Gehalte an gemischten Tocotrienolen aufweist.

15. Verfahren nach Anspruch 14, wobei die Getreidekornfrucht Mais ist.

16. Verfahren nach Anspruch 1, wobei die mindestens 150 ppm gemischte Tocotrienole enthaltende Diät ein Öl von einer Pflanze aufweist, die genetisch so modifiziert worden ist, dass sie erhöhte Gehalte an gemischten Tocotrienolen aufweist.

17. Verfahren nach Anspruch 1, wobei die gemischten Tocotrienole ein Gemisch von Alpha-, Gamma- und Delta-Tocotrienolen aufweisen.

18. Verfahren nach Anspruch 1, wobei die Diät ferner ein anderes Pflanzenphenol aufweist.

19. Verfahren nach Anspruch 18, wobei das Pflanzenphenol aus der Gruppe ausgewählt ist, die aus Alpha-Tocophenol, Beta-Tocophenol, Gamma-Tocophenol, Delta-Tocophenol, Ferulasäure, Kaffeinsäure, Sinapinsäure, Quercetin, Catechinen, Anthocyanidinen und Isoflavonoiden besteht.

20. Verfahren nach Anspruch 1, wobei die Diät 150 ppm bis 300 ppm gemischte Tocotrienole aufweist.

21. Verfahren nach Anspruch 20, wobei die Qualität des Fleischs nach Kriterien gemessen wird, die unter erhöhtem pH-Wert, verbessertem Farbwert, niedrigerem Wert für thiobarbitursäurereaktive Substanzen (TBARS-Wert) und reduzierter Spülung ausgewählt sind.

22. Verfahren nach Anspruch 20, wobei die Diät ferner α-Liponsäure aufweist.

23. Verfahren nach Anspruch 22, wobei der α-Liponsäuregehalt mindestens 500 ppm beträgt.

24. Verfahren nach Anspruch 20, wobei die Diät ferner N-Acetylcystein aufweist.

25. Verfahren nach Anspruch 24, wobei der N-Acetylcystein-Gehalt mindestens 1000 ppm beträgt.

26. Verfahren nach Anspruch 20, wobei die Diät ferner α-Liponsäure und N-Acetylcystein aufweist.

27. Verfahren nach Anspruch 20, wobei die 150 ppm bis 300 ppm gemischte Tocotrienole enthaltende Diät eine Getreidekornfrucht aufweist, die genetisch so modifiziert ist, dass sie erhöhte Gehalte an gemischten Tocotrienolen aufweist.

28. Verfahren nach Anspruch 27, wobei die Getreidekornfrucht Mais ist.

29. Verfahren nach Anspruch 20, wobei die 150 ppm bis 300 ppm gemischte Tocotrienole enthaltende Diät ein Öl von einer Pflanze aufweist, die genetisch so modifiziert worden ist, dass sie erhöhte Gehalte an gemischten Tocotrienolen aufweist.

30. Verfahren nach Anspruch 20, wobei die gemischten Tocotrienole ein Gemisch von Alpha-, Gamma- und Delta-Tocotrienolen aufweisen.

31. Verfahren nach Anspruch 20, wobei die Diät ferner ein anderes Pflanzenphenol aufweist.

32. Verfahren nach Anspruch 31, wobei das Pflanzenphenol aus der Gruppe ausgewählt ist, die aus Alpha-Tocophenol, Beta-Tocophenol, Gamma-Tocophenol, Delta-Tocophenol, Ferulasäure, Kaffeinsäure, Sinapinsäure, Quercetin, Catechinen, Anthocyanidinen und Isoflavonoiden besteht.

## Revendications

1. Procédé pour l'amélioration de la qualité de la viande d'un animal, comprenant l'alimentation de l'animal avec un régime alimentaire comprenant au moins 150 ppm de tocotriénols mélangés, dans lequel la qualité de la viande est choisie parmi la capacité de retenir l'eau, l'aspect, les caractéristiques sensorielles et la stabilité à l'oxydation.

2. Procédé selon la revendication 1, dans lequel la qualité de la viande est mesurée par des critères choisis parmi un pH accru, une valeur de couleur améliorée, une valeur de substance réactive à l'acide thiobarbiturique (TBARS) abaissée et un saignement réduit.

3. Procédé selon la revendication 1, dans lequel le régime alimentaire comprend en outre de l'acide alpha-lipoïque.

4. Procédé selon la revendication 3, dans lequel le niveau d'acide alpha-lipoïque est d'au moins 500 ppm.

5. Procédé selon la revendication 1, dans lequel le régime alimentaire comprend en outre de la N-acétylcystéine.

6. Procédé selon la revendication 5, dans lequel le niveau de N-acétylcystéine est d'au moins 1.000 ppm.

7. Procédé selon la revendication 1, dans lequel le régime alimentaire comprend en outre de l'acide alpha-lipoïque et de la N-acétylcystéine.

8. Procédé selon la revendication 1, dans lequel l'animal n'est pas un ruminant.

9. Procédé selon la revendication 8, dans lequel l'animal est un cochon.

10. Procédé selon la revendication 9, dans lequel les tocotriénols mélangés sont introduits dans le régime alimentaire après que le cochon a atteint environ 80 livres de poids corporel.

11. Procédé selon la revendication 8, dans lequel l'animal est une volaille.

12. Procédé selon la revendication 1, dans lequel l'animal est un ruminant.

13. Procédé selon la revendication 12, dans lequel l'animal est un bovin.

14. Procédé selon la revendication 1, dans lequel le régime alimentaire comprenant au moins 150 ppm de tocotriénols mélangés comprend une culture de graines de céréales génétiquement modifiée pour avoir des niveaux élevés de tocotriénols mélangés.

15. Procédé selon la revendication 14, dans lequel la culture de graines de céréales est un maïs.

16. Procédé selon la revendication 1, dans lequel le régime alimentaire comprenant au moins 150 ppm de tocotriénols mélangés comprend une huile provenant d'une plante qui a été génétiquement modifiée pour avoir des niveaux élevés de tocotriénols mélangés.

17. Procédé selon la revendication 1, dans lequel les tocotriénols mélangés comprennent un mélange de tocotriénols alpha, gamma et delta.

18. Procédé selon la revendication 1, dans lequel le régime alimentaire comprend en outre un autre composé phénolique végétal.

19. Procédé selon la revendication 18, dans lequel le composé phénolique végétal est choisi dans le groupe constitué de tocophérol alpha, de tocophérol bêta, de tocophérol gamma, de tocophérol delta, d'acide férulique, d'acide caféique, d'acide sinapique, de quercétine, de catéchines, d'anthocyanidines et d'isoflavonoïdes.

20. Procédé selon la revendication 1, dans lequel le régime alimentaire comprend de 150 ppm à 300 ppm de tocotriénols mélangés.

21. Procédé selon la revendication 20, dans lequel la qualité de la viande est mesurée par des critères choisis parmi un pH accru, une valeur de couleur améliorée, une valeur de substance réactive à l'acide thiobarbiturique (TBARS) abaissée et un saignement réduit.

22. Procédé selon la revendication 20, dans lequel le régime alimentaire comprend en outre de l'acide alpha-lipoïque.

23. Procédé selon la revendication 22, dans lequel le niveau d'acide alpha-lipoïque est d'au moins 500 ppm.

24. Procédé selon la revendication 20, dans lequel le régime alimentaire comprend en outre de la N-acétylcystéine.

25. Procédé selon la revendication 24, dans lequel le niveau de N-acétylcystéine est d'au moins 1.000 ppm.

26. Procédé selon la revendication 20, dans lequel le régime alimentaire comprend en outre de l'acide alpha-lipoïque et de la N-acétylcystéine.

27. Procédé selon la revendication 20, dans lequel le régime alimentaire comprenant de 150 ppm à 300 ppm de tocotriénols mélangés comprend une culture de graines de céréales génétiquement modifiée pour avoir des niveaux élevés de tocotriénols mélangés.

28. Procédé selon la revendication 27, dans lequel la culture de graines de céréales est un maïs.

29. Procédé selon la revendication 20, dans lequel le régime alimentaire comprenant de 150 ppm à 300 ppm de tocotriénols mélangés comprend une huile provenant d'une plante qui a été génétiquement modifiée pour avoir des niveaux élevés de tocotriénols mélangés.

30. Procédé selon la revendication 20, dans lequel les tocotriénols mélangés comprennent un mélange de tocotriénols alpha, gamma et delta.

31. Procédé selon la revendication 20, dans lequel le régime alimentaire comprend en outre un autre composé phénolique végétal.

32. Procédé selon la revendication 31, dans lequel le composé phénolique végétal est choisi dans le groupe constitué de tocophérol alpha, de tocophérol bêta, de tocophérol gamma, de tocophérol delta, d'acide férulique, d'acide caféique, d'acide sinapique, de quercétine, de catéchines, d'anthocyanidines et d'isoflavonoïdes.
